Europäisches Patentamt

European Patent Office

Office européen des brevets

(11) Veröffentlichungsnummer: **0 184 739**
**B1**

## EUROPÄISCHE PATENTSCHRIFT

(45) Veröffentlichungstag der Patentschrift: **23.05.90**

(51) Int. Cl.⁵: **B 65 F 3/00, B 65 F 3/28**

(21) Anmeldenummer: **85115215.7**

(22) Anmeldetag: **30.11.85**

(54) **Müllsammelfahrzeug.**

(30) Priorität: 03.12.84 DE 3444052
28.01.85 DE 3502756
25.02.85 DE 3506586

(43) Veröffentlichungstag der Anmeldung:
18.06.86 Patentblatt 86/25

(45) Bekanntmachung des Hinweises auf die
Patenterteilung:
23.05.90 Patentblatt 90/21

(84) Benannte Vertragsstaaten:
AT BE CH FR GB IT LI LU NL SE

(56) Entgegenhaltungen:
BE-A- 860 020
DE-A-1 917 682
DE-U-8 427 750
DE-U-8 503 392
FR-A-2 336 320
GB-A-1 308 299

(73) Patentinhaber: NKF Leichtmetallbau Kurt
Hodermann GmbH & Co.
Rigistrasse 1-3
D-1000 Berlin 48 (DE)

(72) Erfinder: Stolle, Ralf
Suttenerstrasse 21
D-1000 Berlin 42 (DE)

(74) Vertreter: Lieck, Hans-Peter, Dipl.-Ing.
Patentanwalt Lieck Maximiliansplatz 10
D-8000 München 2 (DE)

Courier Press, Leamington Spa, England.

## Beschreibung

Die Erfindung betrifft ein MÜllsammelfahrzeug nach dem Oberbegriff des Anspruches 1.

Ein derartiges Müllsammelfahrzeug ist aus der GB-A 1 308 299 bekannt. Es wird durch die Aufnahmevorrichtung am hinteren Ende mit Müll beladen. Während der Beladung ist die Ausschubwand durch den Stellantrieb, einen doppelt wirkenden Hydraulik-Zylinder, nach hinten vorgespannt, wodurch der eingeladene Müll verdichtet wird. Mit zunehmender Müllmenge im Sammelbehälter weicht die Ausschubwand nach vorne zurück, bis sie die vordere Stirnwand des Sammelbehälters erreicht hat und der Sammelbehälter voll ist. Das Müllsammelfahrzeug wird geleert, indem der Müll mittels der Ausschubwand nach Wegschwenken der Aufnahmevorrichtung nach hinten ausgesto8en wird. Das bekannte Müllsammelfahrzeug hat nur eine Kammer für die Aufnahme des Mülls. Es kann daher bei einer Sammelfahrt nicht gleichzeitig getrennt voneinander verschiedene Müllarten, wie z.B. normalen Müll einerseits und Wertstoff-Müll, z.B. Altglas, andererseits aufnehmen.

Aus der DE-A 1 917 682 ist ein Fahrzeug mit einem Behälter für die Aufnahme schlammartiger Abfall-Massen bekannt, bei welchem im Innenraum des Behälters eine axial bewegliche, an der Behälterinnenwand dichtend anliegende Trennwand vorgesehen ist, die sich in einer oder mehreren vorbestimmten axialen Stellungen verriegeln läßt. Der Behälter ist beiderseits der Trennwand mit Eingabeund Entleerungsöffnungen versehen. Dementsprechend schafft die Trennwand zwei separate Kammern im Behälter, in denen getrennt voneinander unterschiedliche Massen, z.B. Fäkalien einerseits und Spülwasser andererseits, aufgenommen werden können. Zur Verschiebung der Trennwand soll die eine oder andere der beiden Kammern mit Druckluft beaufschlagt werden. Einzelheiten hierzu sowie Einzelheiten der Eingabeund Entleerungsöffnungen sind in der DE-A 1 917 682 nicht offenbart; offensichtlich ist nur an die Aufnahme flieBfähiger Massen gedacht.

Der Erfindung liegt die Aufgabe zugrunde, das Müllsammelfahrzeug der eingangs genannten Art so weiterzubilden, da8 in ihm zwei getrennte, während einer Sammelfahrt jedoch gleichzeitig zugängliche Kammern für die Aufnahme unterschiedlicher Müllarten zur Verfügung stehen, die beide in einfacher Weise aus den üblichen Müllbehältern beladen werden können.

Diese Aufgabe ist erfindungsgemäB mit dem im Anspruch 1 und bezüglich vorteilhafter Ausgestaltungen in den Unteransprüchen gekennzeichneten Müllsammelfahrzeug gelöst.

Bei dem neuen Müllsammelfahrzeug, oder kurz Müllfahrzeug, stellt die sowieso vorhandene, quer zur Fahrzeuglängsrichtung ausgerichtete Ausschubwand gleichzeitig eine Trennwand dar, durch die der Sammelbehälter in eine hintere, in üblicher Weise für die Aufnahme normalen Mülls benutzte Kammer und in eine vordere, hinter dem Fahrerhaus des Müllfahrzeuges liegende Kammer für die Aufnahme von Wertstoff-Müll unterteilt wird. Die hintere Kammer wird in üblicher Weise über die Aufnahmevorrichtung am hinteren Ende des Müllsammelfahrzeuges beladen und auch in üblicher Weise nach Wegschwenken der Aufnahmevorrichtung wieder entleert. Zur separaten Beladung der vorderen Wertstoff-Kammer dient die seitliche Hebe- und Kippvorrichtung, mit welcher sich Müllbehälter, die mit Wertstoff, z.B. Glas oder Altpapier, gefüllt sind, anheben und zur Entleerung in die vordere Kammer über die vorzugsweise im Dach des Sammelbehälters vorgesehene Aufnahmeöffnung kippen lassen. Die Entleerung der Wertstoff-Kammer erfolgt problemlos durch die Entleerungsöffnung in der einen Seitenwand des Sammelbehälters, und zwar in vielen Fällen allein unter dem EinfluB der Schwerkraft, wenn nämlich der Wertstoff-Müll, wie z.B. Glas, leicht schüttfähig ist.

Da die Trenn- und Ausschubwand in Fahrzeuglängsrichtung kontinuierlich verschiebbar ist, kann sie nach dem erwarteten Mengenverhältnis zwischen normalem Müll und Wertstoff-Müll so eingestellt werden oder alternativ sich während der Sammelfahrt unter dem von der Aufnahmevorrichtung ausgeübten Verdichtungsdruck selbsttätig so einstellen, daß beide Kammern im Sammelbehälter in etwa gleichzeitig voll gefüllt sind. Trotz dieser flexiblen Einsatzmöglichkeit des neuen Müllfahrzeuges ist der erforderliche bauliche Aufwand vergleichsweise gering, da eine Ausschubwand bei Müllfahrzeugen der hier betrachteten Gattung sowieso vorhanden ist. Ein weiterer Vorteil des erfindungsgemäßen Müllfahrzeuges besteht darin, daß die Trenn- und Ausschubwand, falls sie nicht von vorneherein in ihrer vordersten Position benutzt wurde, auch zu einer Verdichtung des in der vorderen Kammer des Müllbehälters aufgenommenen Wertstoff-Abfalles benutzt werden kann, indem man die Trenn- und Ausschubwand mittels des Stellantriebes nach vorne bewegt.

Die Entleerung der hinteren Kammer im Sammelbehälter wird dadurch gefördert, — daß die in Fahrzeuglängsrich tung gesehene — Dicke der Trenn- und Ausschubwand im unteren Teil nach unten durch eine beim Entleeren als Pflug wirkende Abschrägung auf der hinteren Seite zunimmt. Im übrigen schafft diese Maßnahme die Möglichkeit, die Trenn- und Ausschubwand unter Sicherung gegen Kippen in ihrem unteren Teil an zwei im Sammelbehälter in Fahrzeuglängsrichtung verlaufenden Schienen zu führen. Gewünschtenfalls kann eine zweite Abschrägung auf der vorderen Seite vorgesehen sein, um die Entleerung der vorderen Wertstoff-Kammer zu unterstützen.

Der Stellantrieb ist zweckmäßigerweise durch einen doppelt wirkenden Hydraulikzylinder gebildet, der bei einer bevorzugten Ausbildungsform mit einem Ende an einer von der Trenn- und Ausschubwand nach hinten wegstehenden, unmittelbar Über dem Boden des Sammelbehälters befindlichen Halterung und mit dem anderen

2

Ende an einem am Boden befestigten Widerlager angelenkt ist, das sich am Ort der vorderen Endstellung der Trenn- und Ausschubwand befindet, wobei der Hydraulikzylinder durch eine entsprechende Öffnung in der Trenn- und Ausschubwand hindurch reicht. Bei dieser Ausbildungsform steht aufgrund des am Behälter-Boden befindlichen Hydraulikzylinders immer das praktisch gesamte Volumen des Sammelbehälters als Nutzvolumen zur Verfügung, unabhängig von der durch die Einstellung der Trenn- und Ausschubwand jeweils vorgenommenen Aufteilung auf die vordere und die hintere Kammer.

Für den Einsatz in Fällen, in denen der Wertstoff-Müll nicht schÜttfähig ist, wie z.B. bei Papier, kann in der Wertstoff-Kammer eine zweite vertikale Ausschubwand vorgesehen sein, die mittels eines doppelt wirkenden Stellantriebs quer zur Fahrzeuglängsrichtung verschiebbar ist, wobei ihre Abmessung in Fahrzeuglängsrichtung natürlich nicht größer als der Abstand der ersten Trenn- und Ausschubwand von der vorderen Stirnwand des Sammelbehälters ist, wenn sie sichin ihrer vorderen Endstellung befindet. Bei dieser Ausgestaltung läßt sich die Wertstoff-Kammer auch bei schwierigem Inhalt leicht durch die Öffnung in der einen Seitenwand des Sammelbehälters entleeren. Zweckmäßigerweise wird beim Entleerungsvorgang so vorgegangen, daß zunächst die hintere Kammer mit dem normalen Mull entleert wird, indem man die Trenn- und Ausschubwand nach hinten bewegt. Anschließend wird die zweite Ausschubwand in der Wertstoff-Kammer aus ihrer Ruhestellung bis vor die Entleerungsöffnung bewegt und wieder in die Ruhestellung zurückgezogen. Hierbei wird noch nicht der gesamte Wertstoff-Müll entladen. Dazu läBt man die Trenn- und Ausschubwand in ihre vordere Endstellung laufen, in der die Wertstoff-Kammer ihr kleinstes Volumen hat, und wiederholt dann den Bewegungs-Zyklus der der Wertstoff-Kammer zugeordneten zweiten Ausschubwand.

Über eine im Boden des Sammelbehälters am Ort der in ihre Ruhestellung befindlichen zweiten Ausschubwand vorgesehenen Reinigungsklappe können Müll-Reste, die zwischen die zweite Ausschubwand und die in der Ruhestellung unmittelbar benachbarte Seitenwand des Sammelbehälters geraten sind, nach unten entfernt werden.

Damit das Müllsammelfahrzeug überall ein in etwa gleiches äußeres Quer-Profil hat, ist zweckmäßigerweise ein Abschnitt der Seitenwand des Sammelbehälters im Bereich der der vorderen Wertstoff-Kammer zugeordneten Hebeund Kippvorrichtung zur Fahrzeugmitte versetzt derart, daß die Hebeund Kippvorrichtung nicht über das Profil des Sammelbehälters Übersteht. Damit sich in der durch den entsprechenden Seitenwand-Sprung entstandenen Ecke im Inneren des Sammelbehälters kein Müll festsetzen kann, der durch beide Aufschubwände nicht entfernt werden könnte, besitzt die zweite Ausschubwand zweckmäßigerweise an ihrem hinteren Rand einen vertikalen, von der Fahrzeugmitte weg nach außen abgewinkelten Übergangsabschnitt, der mit der Hauptebene der Ausschubwand einen spitzen Winkel einschließt und in der Ruhe-Endstellung der zweiten Ausschubwand, in der sich diese an dem nach innen versetzten Seitenwand-Abschnitt des Sammelbehälters befindet, bis an den nicht versetzten Seitenwand-Abschnitt reicht. Durch den Übergangsabschnitt wird der Wertstoff-Müll bei der Bewegung der Trenn- und Ausschubwand nach vorne zwangsläufig vor die ins Behälterinnere weisende Seite der zweiten Ausschubwand geleitet, so daß er bei deren Ausschub-Bewegung vollständig erfaßt wird.

Im folgenden ist die Erfindung mit weiteren vorteilhaften Einzelheiten anhand zweier schematisch dargestellte Ausführungsbeispiele näher erläutert.

In den Zeichnungen zeigen:

Figur 1 ein Müllfahrzeug mit einem variabel unterteilbaren Sammelbehälter in schematischer, teilweise geschnitten dargestellter Seitenansicht.

Figur 2 eine Figur 1 entsprechende Darstellung einer Müllfahrzeuges mit einem variabel unterteilbaren Sammelbehälter und einer zweiten Ausschubwand in der vorderen Wertstoff-Kammer des Sammelbehälters,

Figur 3 eine Draufsicht zu Figur 2,

Figur 4 einen Schnitt nach der Linie 4/4 in Figur 3,

Figur 5 einen Querschnitt durch die Führung für die zweite Ausschubwand.

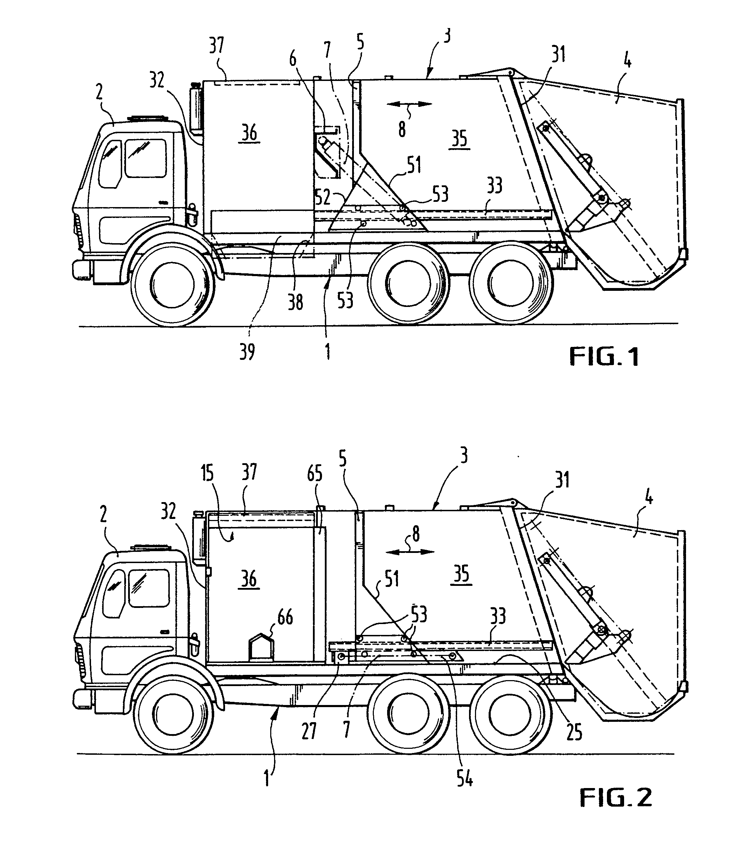

Das Müllfahrzeug gemäß Figur 1 umfaßt ein LKW-Chassis 1 üblicher Bauart mit einem vorderen Fahrerhaus 2. Hinter dem Fahrerhaus 2 ruht auf dem Chassis 1 ein in etwa quaderförmiger Müll-Sammelbehälter 3 sowie am hinteren Ende des Müllfahrzeuges, in Zuordnung zur hinteren Stirnseite 31 des Sammelbehälters 3 eine Aufnahmevorrichtung 4. Die Aufnahmevorrichtung 4 hat eine übliche, an sich bekannte Ausbildung. Mit ihr werden gefüllte Mülltonnen angehoben und durch Kippen entleert. Gleichzeitig wird der Müll 'aus den Mülltonnen verdichtet und in Richtung des Sammelbehälters 3 vorgeschoben. Zum Entleeren des Müllfahrzeuges läßt sich die Aufnahmevorrichtung 4 in ihrer Gesamtheit von der hinteren Stirnseite des Sammelbehälters 3 wegschwenken, so daß der Abfall bzw. Müll im Sammelbehälter 3 nach hinten ausgestoßen werden kann.

Im Inneren des Sammelbehälters 3 ist eine vertikale, sich quer zur Fahrzeuglängsrichtung erstreckende Trenn- und Ausschubwand 5 vorgesehen. Die Trenn- und Ausschubwand 5 ist im Inneren des Sammelbehälters 3 in Fahrzeuglängsrichtung in Richtung des Doppelpfeiles 8 verschiebbar, und zwar zwischen einer vorderen Endstellung, in der sie einen Abstand von der vorderen Stirnwand 32 des Sammelbehälters 3 einhält, und einer hinteren Endstellung am hinteren Ende des Sammelbehälters 3. Vom Ort der vorderen Endstellung der Trenn- und Ausschubwand 5 nach hinten hat der Sammelbehälter ein überall gleiches Innen-Profil, dem der Umriß der Trenn- und Ausschubwand 5 unter Belassung eines ßewegungsspieles gegenüber den seitlichen Wänden des Sammelbehälters entspricht.

Die Trenn- und Ausschubwand 5 ist im unteren Teil so gestaltet, daß ihre — in Fahrzeuglängsrichtung gesehene — Dicke nach unten dreieckförmig zunimmt, so daß sie in diesem Bereich vorne und hinten geneigte Wandfläche 51 bzw. 52 besitzt. Im unteren Bereich der dreieckförmigen Verbreiterung sind an der Trenn- und Ausschubwand stirnseitig auf beiden Seiten je vier Führungsstücke 53 vorgesehen. An der Innenseite jeder Seitenwand des Sammelbehälters 3 ist eine horizontale, sich in Längsrichtung zwischen den beiden Endstellungen der Trenn- und Ausschubwand 5 erstreckende Führungsschiene 33 vorgesehen. An dieser ist die Trenn- und Ausschubwand mit den Führungstücken 53 gelagert, wobei die Anordnung der Führungsstücke 53 mit gegenseitigem Längsabstand und oberhalb sowie unterhalb der Schienen 33 die Trenn- und Ausschubwand 5 gegen Kippen sichert.

Vor dem Ort der vorderen Endstellung der Trenn- und Ausschubwand 5 befindet sich im Sammelbehälter, ungefähr in halber Höhe desselben, ein in Querrichtung sich erstreckender, horizontaler Balken 6. Ein doppelt wirkender Hydraulikzylinder 7, der als Stellantrieb für die Trenn- und Ausschubwand 5 dient, ist mit seinem einen Ende an dem Balken 6 und mit seinem anderen Ende an der Trenn- und Ausschubwand 5, und zwar in Höhe der Führungstücke 53 angelenkt, wobei der Hydraulikzylinder 7 etwa in der Mitte der Fahrzeugbreite positioniert ist. Mittels des Hydraulikzylinders 7 kann die Trenn- und Ausschubwand 5 zwischen ihrer vorderen Endstellung, in der sie an dem Balken 6 anstößt, und ihrer hinteren Endstellung an der hinteren Stirnseite 31 des Sammelbehälters 3 hin- und herverschoben sowie in jeder Stellung durch beidseitige Druckbeaufschlagung des Hydraulikzylinders arretiert werden.

Die Trenn- und Ausschubwand 5 unterteilt das Innere des Sammelbehälters 3 in zwei separate Kammern 35 und 36. Die hintere Kammer 35 dient zur Aufnahme des üblichen Mülls, in Sonderfällen auch von Papier, der bzw. das mittels der Aufnahmevorrichtung 4 eingefüllt und verdichtet wird. Die vordere Kammer 36 dient zur Aufnahme von Wertstoff-Müll, wobei hier insbesondere an Glas gedacht ist.

Der vorderen Kammer 36 ist eine nicht näher gezeigte Aufnahme- bzw. Einfüllöffnung 37 im Dach des Sammelbehälters 3 sowie eine Entleerungsöffnung 38 im unteren Teil einer Seitenwand des Sammelbehälters 3 zugeordnet. Die Entleerungsöffnung 38 ist mittels einer Klappe 39 verschließbar. Der Aufnahmeöffnung 37 ist in nicht näher gezeigter Weise auf der der Entleerungsöffnung 38 gegenüberliegenden Seite des Sammelbehälters eine Hebe- und Kippvorrichtung für die den Wertstoff enthaltenden Müllbehälter vorgesehen, mit welchem letztere angehoben und über der Einfüllöffnung 37 durch Kippen entleert werden können.

Vor Beginn einer Sammelfahrt wird die Trenn-und Ausschubwand 5 durch Betätigung des Hydraulikzylinders 7 im leeren Sammelbehälter 3 so positioniert, daß die Größe der beiden Räume bzw. Kammern 35 und 36 dem erwarteten Müllaufkommen so entspricht, daß beide Kammern im gleichen Maße gefüllt werden. Ist mit einem hohen Anteil normalen Mülls zu rechnen, wird also die Trenn- und Ausschubwand weiter nach vorne positioniert. Ist mit einem hohen Anteil von Glas zu rechnen, z.B. nach Feiertagen, wird die Trenn- und Ausschubwand mehr nach hinten positioniert. Bei der Sammelfahrt wird der normale Müll mittels der Aufnahmevorrichtung 4 in die hintere Kammer 35 geladen, der Wertstoff, z.B. Glas, in die vordere Kammer 36. Sind beide Kammern — normalerweise gleichzeitig — gefüllt, wird zunächst die vordere Kammer 36 durch die Entleerungsöffnung 38 durch Schwerkraft entleert, wobei die vordere geneigte Wandfläche 52 der Trenn- und Ausschubwand 5 den Entleerungsvorgang unterstützt. Ggf. kann auch vor dem Entleeren noch eine Verdichtung des Mülls in der Kammer 36 durch Bewegung der Trenn- und Ausschubwand nach vorne durchgeführt werden. Der normale Abfall bzw. Müll in der hinteren Kammer 35 wird nach Wegschwenken der Aufnahmevorrichtung 4 in der üblichen Weise mittels der Trenn- und Ausschubwand 5 nach hinten aus dem Sammelbehälter 3 ausgestoßen.

Alternativ kann man ohne vorherige Festlegung die Einstellung der Wand 5 auch dem Gleichgewicht zwischen dem Druck, den der von der Aufnahmevorrichtung gepreßte Müll einerseits und der Wertstoff in der Kammer 36 andererseits auf die Wand ausübt, überlassen.

Das in den Figuren 2 bis 4 dargestellte Müllfahrzeug stimmt in den wesentlichen Teilen mit dem Müllfahrzeug nach Figur 1 überein. Soweit Übereinstimmung vorliegt, ist auf eine nochmalige Beschreibung verzichtet und sind gleiche Bezugszeichen verwendet. Der wesentliche Unterschied zwischen beiden Müllfahrzeugen besteht darin, daß der vorderen Wertstoff-Kammer 36 des Müllfahrzeuges nach den Figuren 2 bis 4 eine eigene, zweite vertikale Ausschubwand 15 zugeordnet ist. Die zweite Ausschubwand 15 ist im Inneren der vorderen Kammer 36 quer zur Fahrzeuglängsrichtung in Richtung des Doppelpfeiles 18 verschiebbar, und zwar zwischen einer, in Fahrtrichtung gesehen, rechten in den Figuren gezeigten Ruhe-Endstellung und einer linken Endstellung, in der sich die zweite Ausschubwand 15 unmittelbar vor einer seitlichen Entleerungsöffnung 48 befindet. Die zweite Ausschubwand 15 hat einen rechteckigen Umriß.

Sie schließt am Boden 25 und an der vorderen Stirnwand 32 des Sammelbehälters unter Belassung eines Bewegungsspieles ab. Ihre Abmessung in Fahrzeuglängsrichtung ist so gewählt, daß sie an ihrer geraden hinteren Seitenkante mit der vorderen Seite der Trenn- und Ausschubwand 5 abschließt, wenn sich diese in ihrer vorderen Endstellung befindet. Im Gegensatz zum ersten Ausführungsbeispiel hat die Trenn- und Ausschubwand an ihrer vorderen Seite keine Abschrägung, sondern ist dort durchgehend eben. Oben endet die zweite Ausschubwand 15 mit einem kleinen Abstand vom Dach des Sammelbehälters, um Platz für die durch die Einfüllöffnung 37 eintauchenden Müllbehälter zu lassen.

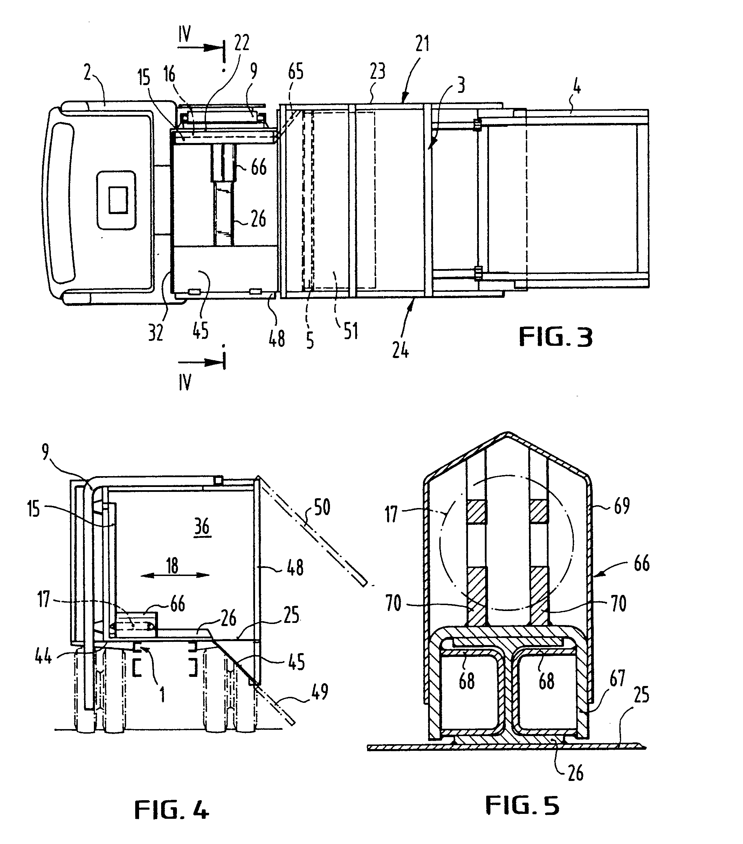

Die zweite Ausschubwand 15 ist auf beiden Seiten eben. In der Mitte, an ihrer der Entleerungsöffnung 48 zugewandten Seite hat sie unmittelbar über dem Boden 25 des Sammelbehälters 3 einen seitlichen, d.h. quer zur Fahrzeuglängsrichtung sich erstreckenden, hohlen Ausleger 66, vgl. auch Figur 5. In dem Ausleger ist ein doppelwirkender Hydraulikzylinder 17 als Stellantrieb für die zweite Ausschubwand 15 aufgenommen. Der Hydraulikzylinder 17 ist einerseits am entferntesten Punkt des Auslegers 66 und andererseits an einem Längs-balken 16 angelenkt, der sich im Sammelbehälter an der in Fahrzeuglängsrichtung rechten Seitenwand 21 erstreckt.

Der Ausleger 66 dient außerdem zur Führung der zweiten Ausschubwand 15, indem er mit einer am Boden 25 des Sammelbehälters befestigten Schiene 26 zusammenwirkt, die quer zur Fahrzeuglängsrichtung ausgerichtet ist. Die Schiene 26 hat einen Doppel-U-Querschnitt. Der Ausleger 66 umfaßt ein nach unten offenes U-Profil 67, an dessen Schenkel zwei nach innen weisende, kleinere U-Profile 68 angeschweißt sind, die in die seitlich offenen Ausnehmungen der Doppel-T-Schiene 26 eingreifen. Auf dem U-Profil 67 sitzt eine Haube 69, welche den Hydraulik-Zylinder 17 überdeckt. Zur Anlenkung desselben sind am entferntesten Punkt des U-profiles 67 zwei Laschen 70 angeschweißt.

Vor der Entleerungsöffnung 48 hat der Boden des Sammel behälters 3 eine nach außen abfallende Abschrägung 45 zur Erleichterung der Entleerung. Die Entleerungs öffnung geht über die ganze Höhe des Sammelbehälters vom Rand der Abschrägung 45 bis zum Dach des Sammelbehälters durch. Sie ist durch zwei miteinander korrespondierende Klappen 49 und 50 verschließbar, von denen eine am Dach des Sammelbehälters und die andere am freien Rand der Abschrägung 45 angelenkt ist. Zum Entleeren wird die untere Klappe 49 nach unten und die obere Klappe 50 nach oben gestellt, wie es in Figur 4 gezeigt ist. Im Boden des Sammelbehälters am Ort der in ihre Ruhestellung befindlichen Ausschubwand 15 befindet sich eine Reinigungsklappe 44, über welche Müll entfernt werden kann, der zwischen die Ausschubwand 15 und die in Fahrtrichtung rechte Seitenwand 21 des Sammelbehälters geraten sein sollte.

Anders als bei dem ersten Ausführungsbeispiel liegt auch der zur Verstellung der Trenn- und Ausschubwand 5 dienende Hydraulikzylinder 7 unmittelbar über dem Boden 25 des Sammelbehälters 3. Zu diesem Zweck weist die Trenn- und Ausschubwand 5 an ihrer hinteren Seite unmittelbar über dem Boden eine nach hinten wegstehende Halterung 54 auf, an deren entferntem Ende der Hydraulikzylinder 7 angelenkt ist. Der Hydraulikzylinder erstreckt sich parallel zur Halterung und durch eine entsprechende Öffnung am unteren Rand der Trenn-Ausschubwand hindurch bis zu einem Widerlager 27, das am Boden des Sammelbehälters fest angebracht ist. Das Widerlager 27 markiert die vordere End- oder Ruhestellung der Trenn-Ausschubwand, in welcher diese über dem Widerlager 27 steht. Figur 2 zeigt die Trenn- und Ausschubwand in einer Stellung, in der sie aus ihrer vorderen Endstellung ein Stück nach hinten versetzt ist, Figur 3 in der vorderen Endstellung.

Die der vorderen Wertstoff-Kammer 36 zugeordnete Hebeund Kippvorrichtung ist mit 9 bezeichnet. Sie befindet sich an der rechten Seitenwand 21 des Sammelbehälters und reicht bis auf das Dach desselben, vgl. Figur 4.

Damit die Hebeund Kippvorrichtung 9 nicht über das Profil des Sammelbehälters 3 seitlich übersteht, ist der vordere Abschnitt 22 der rechten Seitenwand, wo die Hebe- und Kippvorrichtung 9 vorgesehen ist, gegenüber dem hinteren Abschnitt 23 der Seitenwand entsprechend nach innen, zur Fahrzeugmitte versetzt.

Die zweite Ausschubwand 15 weist an ihrem in Fahrzeuglängsrichtung hinteren Rand einen vertikalen, von der Fahrzeugmitte weg nach außen abgewinkelten Übergangsabschnitt 65 auf, der mit der Hauptebene der zweiten Ausschubwand 15 einen spitzen Winkel einschließt. Der Übergangsabschnitt 65 ist so bemessen, daß er in der Ruhe-Endstellung der zweiten Ausschubwand, in der sich diese unmittelbar neben dem vorderen Seitenwandabschnitt 22 befindet, bis an den hinteren Seitenwand-Abschnitt 23 reicht und den am Übergang zwischen den beiden Seidenwand-Abschnitten vorhandenen, rechtwinkligen Wandsprung überdeckt. Gleichzeitig stellt der Übergangsabschnitt 65 den Abschluß der zweiten Ausschubwand 15 zur Trenn- und Ausschubwand 5 her, wenn sich letztere in ihrer vorderen Endstellung befindet.

Zur Entleerung des MÜllfahrzeuges wird in der eingangs beschriebenen Weise zunächst die Trenn- und Ausschubwand 5 in Richtung des Pfeiles 8 nach hinten bewegt, anschließend die zweite Ausschubwand 15 in Richtung des Pfeiles 18 nach links bis in ihre linke Endstellung und zurück in ihre Ruhestellung, anschließend die Trenn- und Ausschubwand 5 zurück in ihre vordere Ruhe-Endstellung, wonach der Bewegungs-Zyklus der zweiten Ausschubwand 15 nochmals wiederholt wird.

**Patentansprüche**

1. Müllsammelfahrzeug mit einem Sammelbehälter (3), mit einer am hinteren Ende des Müllsammelfahrzeuges vorgesehenen, der hinteren Stirnseite (31) des Sammelbehälters (3) zugeordneten und wegschwenkbaren Aufnahmevorrichtung (4) und mit einer im Sammelbehälter (3) vorgesehenen vertikalen Ausschubwand (5), die mittels eines doppelt wirkenden Stellantriebes (7) in Fahrzeuglängsrichtung verschiebbar ist, dadurch gekennzeichnet, daß die Ausschubwand (5) in ihrer vorderen Endstellung einen Abstand von der vorderen Stirnwand (32) des Sammelbehälters (3) einhält und eine Trennwand bildet, die im Sammelbehälter zwischen sich und der vorderen Stirnwand (32) eine besondere Kammer (36) für die getrennte Aufnahme von Wertstoffen wie Glas oder dergleichen abteilt, daß der Wertstoff-Kammer (36) eine eigene Aufnahmeöffnung (37) sowie eine eigene Entleerungsöffnung (38; 48) in einer Seitenwand (24) des Sammelbehälters (3) zugeordnet sind und daß an der der Entleerungsöffnung (38; 48) gegenüberliegenden Seitenwand (21) des Sammelbehälters (3) eine der Aufnahmeöffnung (37) zugeordnete Hebe- und Kippvorrichtung (9) für Müllbehälter vorgesehen ist.

2. Müllsammelfahrzeug nach Anspruch 1, bei welchem der Stellantrieb durch einen doppelt wirkenden Hydraulik-Zylinder (7) gebildet ist, dadurch gekennzeichnet, daß der Hydraulik-Zylinder (7) einerseits an eine Halterung (54) angelenkt ist, die unmittelbar über dem Boden (25) des Sammelbehälters (3) von der Trenn- und Ausschubwand (5) nach hinten wegsteht, und andererseits an einem am Boden (25) am Ort der vorderen Endstellung der Trenn- und Ausschubwand (5) befestigten Widerlager.

3. Müllsammelfahrzeug nach Anspruch 1 oder 2, dadurch gekennzeichnet, daß ein Abschnitt (22) der Seitenwand (21) des Sammelbehälters (3) im Bereich der Hebe- und Kippvorrichtung (9) zur Fahrzeugmitte derart versetzt ist, daß die Hebe- und Kippvorrichtung (9) nicht über das Profil des Sammelbehälters (3) übersteht.

4. Müllsammelfahrzeug nach Anspruch 1, 2 oder 3, dadurch gekennzeichnet, daß in der Wertstoff-Kammer (36) eine zweite vertikale Ausschubwand (15) vorgesehen ist, die mittels eines doppelt wirkenden Stellantriebes (17) quer zur Fahrzeuglängsrichtung verschiebbar ist und deren Abmessung in Fahrzeuglängsrichtung dem Abstand der ersten Trenn- und Ausschubwand (5) von der vorderen Stirnwand (32) des Sammelbehälters (3) in ihrer vorderen Endstellung entspricht.

5. Müllsammelfahrzeug nach Anspruch 3 und 4, dadurch gekennzeichnet, daß die zweite Ausschubwand (15) an ihrem hinteren Rand einen vertikalen, von der Fahrzeugmitte weg nach außen abgewinkelten Übergangsabschnitt (65) aufweist, der mit der Hauptebene der Ausschubwand (15) einen spitzen Winkel einschließt und in der Ruhe-Endstellung der zweiten Ausschubwand, in der sich diese an dem nach innen versetzten Seitenwand-Abschnitt (22) des Sammelbehälters (3) befindet, bis an den nicht versetzten Seitenwand-Abschnitt (23) reicht.

6. Müllsammelfahrzeug nach Anspruch 4 oder 5, dadurch gekennzeichnet, daß im Boden des Sammelbehälters (3) am Ort der in ihrer Ruhe-Endstellung befindlichen zweiten Ausschubwand (15) eine Reinigungsklappe (44) vorgesehen ist.

**Revendications**

1. Véhicule de collecte des ordures, comprenant un réservoir de collecte (3), avec un dispositif de réception (4) prévu à l'extrémité arrière du véhicule de collecte des ordures, associé à la face frontale arrière (31) du réservoir de collecte (3) et susceptible d'être éloigné par pivotement, et comportant une paroi de refoulement verticale (5) prévue dans le réservoir de collecte (3), susceptible d'être déplacée en direction longitudinale du véhicule, au moyen d'un entraînement positionneur (7) à double action, caractérisé en ce que, dans sa position finale avant, la paroi de refoulement (5) maintient un écartement par rapport à la paroi frontale avant (32) du réservoir de collecte (3) et constitue une paroi de séparation subdivisant dans le réservoir de collecte, entre lui et la paroi frontale avant (32), une chambre (36) particulière destinée à la réception séparée de matériaux tels que le verre ou similaire, en ce qu'une ouverture de réception propre (37) ainsi qu'une ouverture de vidage propre (38; 48) situés dans un paroi latérale (24) du réservoir de collecte (3) sont associées à la chambre à matériau (36) et en ce qu'un dispositif levant et basculant (9) destiné au réservoir à ordures et associé à l'ouverture de réception (37) est prévu sur la paroi latérale (21) du réservoir de collecte (3) qui se trouve sur la paroi latérale (21) opposée à l'ouverture de vidage (38; 48).

2. Véhicule de collecte des ordures selon la revendica tion 1, dans lequel l'entraînement positionneur est constitué par un vérin hydraulique (7) à double action, caractérisé en ce que le vérin hydraulique (7) est d'un côté articulé à une fixation (54) situé à distance, vers l'arrière, de la paroi de séparation et de refoulement (5), directement au-dessus du fond (25) du réservoir de collecte (3), et de l'autre côté à une butée fixée sur le fond (25), à l'emplacement de la position finale avant de la paroi de séparation et de refoulement (5).

3. Véhicule de collecte des ordures selon la revendication 1 ou 2, caractérisé en ce qu'une partie (22) de la paroi latérale (21) du réservoir de collecte (3) est décalée par rapport à l'axe du véhicule, dans la zone du dispositif levant et basculant (9), de façon que le dispositif levant et basculant (9) ne dépasse pas le gabarit du réservoir de collecte (3).

4. Véhicule de collecte des ordures selon la revendication 1, 2 ou 3, caractérisé en ce qu'une deuxième paroi de refoulement verticale (15) est prévue dans la chambre à matériaux (36), qui est susceptible de se déplacer transversalement à la direction longitudinale du véhicule, au moyen d'un entraînement positionneur (17) à double action et dont les dimensions, mesurées dans la direction longitudinale du véhicule, correspondant, dans sa position finale avant, à l'écartement entre la première paroi de séparation et de refoulement (5) et la paroi frontale avant (32) du réservoir de collecte (3).

5. Véhicule de collecte des ordures selon les revendications 3 et 4, caractérisé en ce que la deuxième paroi de refoulement (15) présente sur son bord arrière une partie de transition (65), pliée en s'écartant vers l'extérieur de l'axe du véhicule, qui fait un angle aigu avec le plan principal de la paroi de refoulement (15) et qui arrive jusqu'à la partie de paroi latérale (23) qui n'est pas décalée, dans la position finale de repos de la deuxième paroi de refoulement dans laquelle se trouve cette partie de paroi latérale (22) du réservoir de collecte (3) qui est décalée vers l'intérieur.

6. Véhicule de collecte des ordures selon la revendica tions 4 ou 5, caractérisé en ce qu'un clapet de nettoyage (44) est prévu sur le fond du réservoir de collecte (3), à l'emplacement où la deuxième paroi de refoulement (15) se trouve dans sa position finale de repos.

**Claims**

1. A refuse collection vehicle comprising a collecting container (3), with an input arrangement (4) provided at the rear end of the refuse collection vehicle, associated with the rear end side (31) of the collecting container (3) and outwardly pivotable and with a vertical ejection wall (5) provided within the collecting container (3), which is displaceable in the longitudinal direction of the vehicle by means of a double-acting servo-drive (7), characterised in that the ejection wall (5) in its forward end position maintains a distance from the front end side (32) of the collecting container (3) and forms a partition which within the collecting container delimits a special compartment (36) between itself and the front end wall (32) for separate reception of valuable materials such as glass or the like, that the compartment (36) for valuable materials has allocated to it its own reception opening (37) as well as its own discharge opening (38; 48) in a sidewall (24) of the collecting container (3) and that a lifting and tipping mechanism (9) for refuse containers associated with the reception opening (37) is provided on the sidewall (21) of the collecting container (3) which is opposite the discharge opening (38; 48).

2. A refuse collection vehicle according to claim 1, in which the servo-drive is formed by a double-acting hydraulic cylinder (7), characterised in that the hydraulic cylinder (7) is articulated on the one hand to a bracket (54) which projects rearwards from the partitioning and ejection wall (5) immediately above the floor (25) of the collecting container (3) and on the other hand to a support fastened to the floor (25) at the point of the forward end position of the partitioning and ejection wall (5).

3. A refuse collection vehicle according to claim 1 or 2, characterised in that a section (22) of the sidewall (21) of the collecting container (3) is offset from the centre of the vehicle in the region of the lifting and tipping device (9) in such a way that the lifting and tipping device (9) does not project beyond the outline of the collecting container (3).

4. A refuse collection vehicle according to claim 1, 2 or 3, characterised in that in the compartment (36) for valuable materials there is provided a second vertical ejection wall (15) which is displaceable transversely to the longitudinal direction of the vehicle by means of a double-acting servo-drive (17) and the dimension of which in the longitudinal direction of the vehicle corresponds to the distance of the first partitioning and ejection wall (5) from the front end wall (32) of the collecting container (3) in its forward end position.

5. A refuse collection vehicle according to claims 3 and 4, characterised in that the second ejection wall (15) has at its rear edge a vertical transition section (65) outwardly angled over away from the centre of the vehicle, which forms an acute angle with the principal plane of the ejection wall (15) and in the idle end position of the second ejection wall at which the latter is situated at the inwardly offset sidewall section (22) of the collecting container (3), extends as far as the non-offset sidewall section (23).

6. A refuse collection vehicle according to claim 4 or 5, characterised in that a cleaning flap (44) is provided in the floor of the collecting container (3) at the point of the second ejection wall (15) situated in its idle end position.

FIG.1

FIG.2

1

FIG. 3

FIG. 4

FIG. 5